# FASCICULE DE BREVET EUROPEEN

(11) **EP 2 570 617 B1**
(45) Date de publication et mention de la délivrance du brevet: **15.01.2014**
(21) Numéro de dépôt: 12005977.9
(22) Date de dépôt: 21.08.2012
(51) Int. Cl.: F01D 21/02

(54) **Procédé de commande pour système de sécurité survitesse, système et aéronef associé**
Steuerverfahren für Überdrehzahl-Sicherungssystem, System und entsprechendes Luftfahrzeug
Control method for an overspeed safety system, associated system and aircraft

(30) Priorité: 16.09.2011 FR 1102811
(43) Date de publication de la demande: 20.03.2013
(73) Titulaire: Eurocopter, 13725 Marignane Cedex (FR)
(72) Inventeur: Rossotto, Régis, 13012 Marseille (FR); Vieira, Hilario, 13130 Berre L'Etang (FR)
(74) Mandataire: GPI & Associés

(56) Documents cités:
- EP-A2- 1 739 436
- US-A- 4 500 966
- US-A- 5 363 317
- US-A- 5 948 023

## Description

La présente invention concerne un procédé de commande pour un système de sécurité survitesse, un tel système de sécurité survitesse et un aéronef muni de ce système de sécurité survitesse:

L'invention se rapporte au domaine technique général des systèmes assurant la sécurité de fonctionnement des moteurs d'un aéronef, et notamment la sécurité de fonctionnement d'un giravion ou d'un hélicoptère bimoteur.

La présente invention concerne plus particulièrement une protection d'une installation motrice bimotrice en cas de survitesse d'un ou des deux moteurs.

Un giravion bimoteur inclut généralement un premier moteur et un deuxième moteur entraînant conjointement un rotor principal de sustentation voire de propulsion par une chaîne de transmission de puissance.

Le premier moteur et le deuxième moteur sont généralement contrôlés respectivement par une première unité de contrôle et une deuxième unité de contrôle. De telles unités de contrôles sont dénommées « Full Authority Digital Engine Control » en langue anglaise ou plus simplement « FADEC ».

Chaque unité de contrôle peut comprendre un calculateur et des périphériques de commande et de contrôle s'interfaçant entre le cockpit et le moteur associé de l'aéronef.

Parmi les moteurs utilisés, on connaît notamment les moteurs thermiques à turbines libres, une turbine libre à au moins un étage mettant en rotation un arbre de travail engrenant la chaîne de transmission de puissance.

En cas de rupture de la chaîne de transmission de puissance ou de glissement d'une roue libre de cette chaîne de transmission notamment, la vitesse de rotation de la turbine libre d'un moteur peut augmenter considérablement. L'homme du métier considère alors qu'un tel moteur est en survitesse, une telle survitesse pouvant conduire à un emballement et à un éclatement du moteur.

Par suite, les aéronefs sont généralement munis de systèmes de sécurité pour éviter une survitesse des moteurs susceptible d'être la cause d'événements catastrophiques pour l'aéronef et ses occupants.

Un système mécanique est parfois dénommé « blade shedding » en langue anglaise, ce système mécanique étant applicable à un turbomoteur à turbine libre.

Ce système mécanique consiste alors à agencer un blindage autour de la turbine et de favoriser l'éjection des aubes de la turbine à compter d'une limite prédéterminée de vitesse de rotation.

Au-delà de cette limite prédéterminée, un élément fusible reliant chaque aube à un moyeu de la turbine est par exemple rompu. Chaque aube est alors désolidarisée du moyeu, les aubes étant toutefois contenues dans le moteur grâce au blindage.

Il en résulte nécessairement une diminution de la vitesse de rotation de la turbine permettant de stopper la survitesse de la turbine libre.

La survitesse du moteur est alors stoppée, mais ce moteur est néanmoins partiellement détruit.

Un système électronique vise à couper les moteurs pour éviter l'apparition d'une survitesse.

Le constructeur établit alors un seuil de vitesse de rotation de la turbine libre dans le cadre d'un turbomoteur.

Lorsque l'unité de contrôle de ce moteur détecte une survitesse, l'unité de contrôle arrête ce moteur.

Dans cette configuration, le moteur n'est pas endommagé par le système de sécurité.

La survitesse simultanée des deux turbomoteurs d'un aéronef est par ailleurs extrêmement rare.

Cependant, une survitesse simultanée peut se produire :
- lors d'une manoeuvre particulièrement sévère de l'aéronef suite à laquelle les deux moteurs atteignent quasiment simultanément le seuil de coupure et sont donc conjointement coupés.
- en cas de défaillance électronique des deux unités de contrôle,
- en cas de perte des deux liaisons moteur - chaîne de transmission

L'aéronef peut alors se trouver dans une situation délicate dans la mesure où tous les moteurs sont coupés.

Selon une variante, on inhibe la coupure d'un moteur en cas de coupure par survitesse de l'autre moteur. Après la coupure d'un premier moteur, en cas de survitesse d'un deuxième moteur, ce deuxième moteur n'est plus autorisé à actionner sa protection contre la survitesse.

Dans un tel cas de figure, le deuxième moteur n'est plus protégé contre un passage en survitesse. Une telle situation est improbable mais néanmoins possible. En conséquence, si le second moteur se trouve par la suite en condition de survitesse, ce deuxième moteur ne pourra pas être coupé automatiquement puisque sa protection est inhibée. Le deuxième moteur risque donc de s'emballer et d'éclater.

Selon une autre variante, il est possible de réarmer la mise en oeuvre d'une protection électronique contre la survitesse du deuxième moteur pour éviter un tel risque.

Il est aussi concevable d'analyser un certain nombre de paramètres en cas de survitesse pour déterminer l'origine du phénomène et d'appliquer ou non la coupure du second moteur au-delà du seuil de coupure.

En effet, on peut détecter que l'augmentation de la vitesse de rotation de la turbine d'un moteur est temporaire. Dès lors, il n'est pas nécessairement utile de couper le moteur.

Par ailleurs, on note que l'arrière plan technologique inclut le document US4638781 qui présente un dispositif pour couper une alimentation en carburant d'un moteur.

L'arrière plan technologique inclut aussi les documents US 4 500 966, US 5 363 317, US 5 948 023, EP 1 739 436.

Les documents US 4 500 966 et 5 363 317 font référence à des limites de fonctionnement.

Le document US 5 948 023 fait référence à des essais de survitesse.

L'objet de la présente invention vise un procédé alternatif pour d'une part éviter l'éclatement des moteurs d'un aéronef notamment bimoteur et d'autre part éviter de couper l'ensemble des moteurs de cet aéronef si ce n'est pas nécessaire.

Selon l'invention, un procédé de commande pour commander un système de sécurité survitesse d'un aéronef comportant au moins un premier moteur et un deuxième moteur, est notamment remarquable en ce qu'on coupe un moteur lorsqu'un paramètre de surveillance de ce moteur dépasse un premier seuil et on coupe un autre moteur distinct dudit moteur lorsque le paramètre de surveillance de cet autre moteur dépasse un deuxième seuil, ledit deuxième seuil étant supérieur audit premier seuil.

Par exemple, on coupe le premier moteur lorsqu'il dépasse le premier seuil, puis on coupe le deuxième moteur lorsqu'il dépasse le deuxième seuil.

Dans le cas d'une survitesse impliquant les deux moteurs, le paramètre de surveillance de chaque moteur peut atteindre et dépasser le premier seuil.

Toutefois, contrairement à certaines réalisations de l'état de la technique, on coupe alors un unique moteur.

De plus, contrairement à d'autres réalisations de l'état de la technique, on n'inhibe pas la protection contre la survitesse de l'autre moteur.

Si la survitesse est due à une rupture de la chaîne de transmission de puissance suite à un crash hors norme par exemple, le paramètre de surveillance du moteur en fonctionnement dépasse le deuxième seuil. Ce moteur en fonctionnement est alors coupé par sécurité.

Au contraire, si la survitesse simultanée a pour origine un phénomène temporaire provoqué éventuellement par une manoeuvre sévère, ce phénomène temporaire prend fin avant que le moteur en fonctionnement dépasse le deuxième seuil. Ce moteur reste alors en fonctionnement.

De plus, ce moteur en fonctionnement conserve une protection contre une survitesse.

Ce procédé peut de plus comporter une ou plusieurs des caractéristiques qui suivent.

Chaque moteur comportant une turbine libre, le paramètre de surveillance d'un moteur peut être la vitesse de rotation de la turbine libre de ce moteur.

Il est à noter que le premier seuil peut être supérieur à une valeur de rotation de la turbine libre appelée « vitesse de rotation maximale transitoire » par l'homme du métier. Cette vitesse de rotation maximale transitoire est une vitesse connue par les constructeurs de giravions et notamment d'hélicoptères, la vitesse de rotation maxi transitoire pouvant être atteinte suite à une manoeuvre dénommée « quick stop » en langue anglaise consistant à baisser puis à augmenter le pas collectif des pales du rotor principal pour cabrer l'aéronef.

Selon un autre aspect, chaque moteur comportant un moyen de sécurité dit complémentaire agissant sur des aubes d'une turbine, le moyen de sécurité étant activé à compter d'une limite prédéterminée du paramètre de surveillance du moteur, le deuxième seuil est inférieur à ladite limite prédéterminée.

Le moyen de sécurité peut consister en un moyen de type « blade shedding ». En cas de dysfonctionnement accidentel empêchant la coupure d'un moteur au-delà du deuxième seuil, la protection de l'aéronef est assurée par le moyen de sécurité complémentaire.

Par ailleurs, chaque moteur pouvant être alimenté en carburant par une pompe de gavage, selon une variante on coupe la pompe de gavage d'un moteur lorsque l'on coupe ce moteur.

En effet, si la survitesse intervient à cause d'un accident ayant conduit à la perte de la liaison mécanique entre le moteur et la chaîne de transmission, un feu peut être déclenché ou alimenté par l'apport de carburant. En coupant la pompe de gavage, on maximise la sécurité.

En outre, une première unité de contrôle peut commander un premier moteur et une deuxième unité de contrôle peut commander un deuxième moteur. Chaque unité de contrôle peut notamment requérir la coupure du moteur correspondant. Une telle unité de contrôle peut être du type connu sous l'acronyme FADEC.

Selon un premier mode de réalisation, une unité de contrôle coupe au premier seuil le moteur associé si l'autre unité de contrôle indique à cette unité de contrôle que l'autre moteur n'est pas coupé.

Ainsi, les unités de contrôle « dialoguent » entre elles en vol pour déterminer le seuil à appliquer au moteur qu'elles commandent.

Par exemple, lorsque la première unité de contrôle détecte que le paramètre de surveillance du premier moteur a franchi le premier seuil, la première unité de contrôle « interroge » la deuxième unité de contrôle.

Si la deuxième unité de contrôle lui indique que le deuxième moteur est éteint, la première unité de contrôle ne coupe pas le premier moteur lorsque le premier seuil est dépassé. Le premier moteur ne sera en effet éteint que lorsque le paramètre de surveillance de ce premier moteur dépasse le deuxième seuil.

A l'inverse, si la deuxième unité de contrôle indique à la première unité de contrôle que le deuxième moteur est en fonctionnement, la première unité de contrôle coupe le premier moteur dès le premier seuil.

Selon un deuxième mode de réalisation, les seuils à appliquer sont déterminés avant le vol en tant que tel, plus précisément au cours d'une phase de démarrage de l'aéronef.

Ainsi, au cours d'une phase de démarrage, on établit par exemple qu'une unité de contrôle doit couper le moteur associé si le paramètre de surveillance du moteur associé dépasse le premier seuil, l'autre unité de contrôle devant couper l'autre moteur si le paramètre de surveillance de l'autre moteur dépasse le deuxième seuil.

Par suite, indépendamment du mode de réalisation, chaque unité de contrôle est capable de couper le moteur associé selon deux seuils distincts, le seuil à appliquer par chaque unité de contrôle étant déterminé au début du vol.

Selon le premier mode de réalisation, une unité de contrôle associée à un moteur détermine le seuil à appliquer en vol en fonction de l'état de fonctionnement de l'autre moteur.

Par contre, selon le deuxième mode de réalisation, au cours d'une phase de démarrage et donc avant qu'un paramètre de surveillance du moteur dépasse le premier seuil, on établit avant le décollage et pour tout le vol qu'une unité de contrôle doit appliquer le premier seuil au moteur qu'elle commande, alors que l'autre unité de contrôle doit appliquer le deuxième seuil au moteur qu'elle commande.

D'un vol à un autre, une unité de contrôle peut mettre en oeuvre deux seuils distincts.

Ces réalisations permettent d'associer chaque moteur à un seuil, sans avoir à réaliser des unités de contrôle spécialisées. Au lieu de fabriquer deux unités de contrôle distinctes programmées chacune pour appliquer un unique seuil, on fabrique des unités de contrôle aptes à appliquer les deux seuils prévus. Cependant, au démarrage ou en vol selon la réalisation, on choisit le seuil que doit appliquer chaque unité de contrôle en prenant soin que deux moteurs distincts soient associés à deux seuils distincts.

Par exemple, selon une première variante du deuxième mode de réalisation, chaque unité de contrôle pouvant couper le moteur associé au premier seuil et au deuxième seuil, on choisit le seuil appliqué par chaque unité de contrôle en fonction de l'ordre de mise en marche des unités de contrôle.

L'unité de contrôle mise en marche en premier lieu peut être qualifiée de « maître », l'unité de contrôle mise en marche en second lieu étant qualifiée d'« esclave ».

L'unité de contrôle « maître » mise en marche en premier lieu peut mettre en oeuvre le premier seuil alors que l'unité de contrôle « esclave » mise en marche en second lieu met en oeuvre le deuxième seuil. Le premier moteur associé à la première unité de contrôle sera coupé si son paramètre de surveillance dépasse le premier seuil alors que le deuxième moteur associé à la deuxième unité de contrôle sera coupé si son paramètre de surveillance dépasse le deuxième seuil

L'inverse est évidemment possible, l'unité de contrôle « maître » mise en marche en premier lieu mettant en oeuvre le deuxième seuil alors que l'unité de contrôle « esclave » mise en marche en second lieu met en oeuvre le premier seuil.

En effet, lors du démarrage de l'aéronef, les unités de contrôle ne sont pas activées simultanément, un décalage temporel éventuellement infime existant.

Ainsi, lorsqu'une unité de contrôle est mise en marche, cette unité de contrôle peut examiner l'état de l'autre unité de contrôle pour déterminer si elle a été mise en fonctionnement avant ladite autre unité de contrôle.

Dans l'affirmative, cette unité de contrôle prend le qualificatif de « maître » et met en oeuvre le premier seuil par exemple. Dans la négative, cette unité de contrôle prend le qualificatif de « esclave » et met alors en oeuvre le deuxième seuil.

Selon une deuxième variante, un dispositif externe distinct des unités de contrôle indique avant le décollage à chaque unité de contrôle le seuil à mettre en oeuvre durant la totalité du vol. Ce dispositif externe peut mettre en oeuvre des organes externes de type organe mécanique, électrique ou avionique.

Le dispositif externe peut appliquer un critère géographique de positionnement dans l'aéronef en indiquant à une unité de contrôle dite «gauche » par commodité d'appliquer un seuil et à une unité de contrôle dite «droite » par commodité d'appliquer l'autre seuil.

Selon une variante, le dispositif externe comporte un organe avionique tel qu'un calculateur, un processeur, un segment de code ou tout autre moyen équivalent. L'organe avionique indique à chaque unité de contrôle le seuil à appliquer, en fonction du critère géographique précité par exemple.

Selon une autre variante, le dispositif externe comporte un organe externe par unité de contrôle, un organe externe d'une unité de contrôle étant différant de l'organe externe de l'autre unité de contrôle. On choisit alors le seuil à appliquer par une unité de contrôle en fonction de l'organe externe associé.

On comprend que l'organe externe est distinct d'une unité de contrôle à l'autre, afin que cette différence soit reconnue et conduise à l'affectation du premier seuil à une des deux unités et du deuxième seuil à l'autre unité de contrôle.

Selon un exemple, chaque organe externe comprend un câblage électrique, ce câblage électrique provenant d'une alimentation et arrivant sur certaines entrées électriques de l'unité de contrôle. En fonction des entrées alimentées, l'unité de contrôle applique un seuil particulier.

En utilisant deux câblages distincts, on s'assure que deux unités de contrôle appliquent deux seuils distincts.

La méthode dénommée « pin programming » en langue anglaise peut ainsi être utilisée.

Selon un autre exemple, un organe externe inclut un moyen d'activation d'un élément mécanique de l'unité de contrôle. Sous l'effet du moyen d'activation, l'élément mécanique se déplace ou se déforme lors de l'installation de l'unité de contrôle, cet élément mécanique engendrant alors un signal électrique particulier dans l'unité de contrôle associée à un seuil à appliquer.

Par exemple, un premier organe externe inclut un support de l'unité de contrôle muni d'un doigt qui coopère avec un élément mécanique de la première unité de contrôle pour signaler à cette première unité de contrôle le seuil à appliquer. De plus, un deuxième organe externe inclut un support de l'unité de contrôle dépourvu dudit doigt pour ne pas activer l'élément mécanique de la deuxième unité de contrôle afin de signaler à cette deuxième unité de contrôle le seuil à appliquer.

Selon un troisième mode de réalisation, les unités de contrôle peuvent être dissymétriques. Ainsi une première unité de contrôle peut être programmée pour appliquer uniquement un seuil, une deuxième unité de contrôle étant programmée pour appliquer uniquement l'autre seuil.

Outre un procédé, l'invention vise un système de sécurité survitesse comportant au moins un premier moteur et un deuxième moteur mettant en oeuvre ce procédé.

Ce système de sécurité est notamment remarquable en ce qu'il comporte une première unité de contrôle commandant le premier moteur et une deuxième unité de contrôle commandant un deuxième moteur, chaque unité de contrôle coopérant avec un dispositif de mesure pour déterminer un paramètre de surveillance du moteur associé, une unité de contrôle exécutant des instructions pour couper le moteur associé lorsqu'un paramètre de surveillance de ce moteur dépasse un premier seuil, l'autre unité de contrôle exécutant des instructions pour couper l'autre moteur distinct de ce moteur lorsque le paramètre de surveillance de cet autre moteur dépasse un deuxième seuil, ledit deuxième seuil étant supérieur audit premier seuil.

Par ailleurs, chaque unité de contrôle est éventuellement reliée directement ou indirectement à une pompe de gavage du moteur associé, l'unité de contrôle coupant la pompe de gavage et le moteur associé en cas de dépassement du seuil adéquat.

Enfin, l'invention vise aussi un aéronef comportant au moins un premier moteur et un deuxième moteur.

Cet aéronef est notamment remarquable en ce qu'il comporte un système de sécurité survitesse du type précédemment décrit.

L'invention et ses avantages apparaîtront avec plus de détails dans le cadre de la description qui suit avec des exemples de réalisation donnés à titre illustratif en référence aux figures annexées qui représentent :
- la figure 1, un schéma représentant un premier mode de réalisation de l'aéronef selon l'invention, et
- les figures 2 à 4, des schémas représentant un deuxième mode de réalisation de l'aéronef selon l'invention

Les éléments présents dans plusieurs figures distinctes sont affectés d'une seule et même référence.

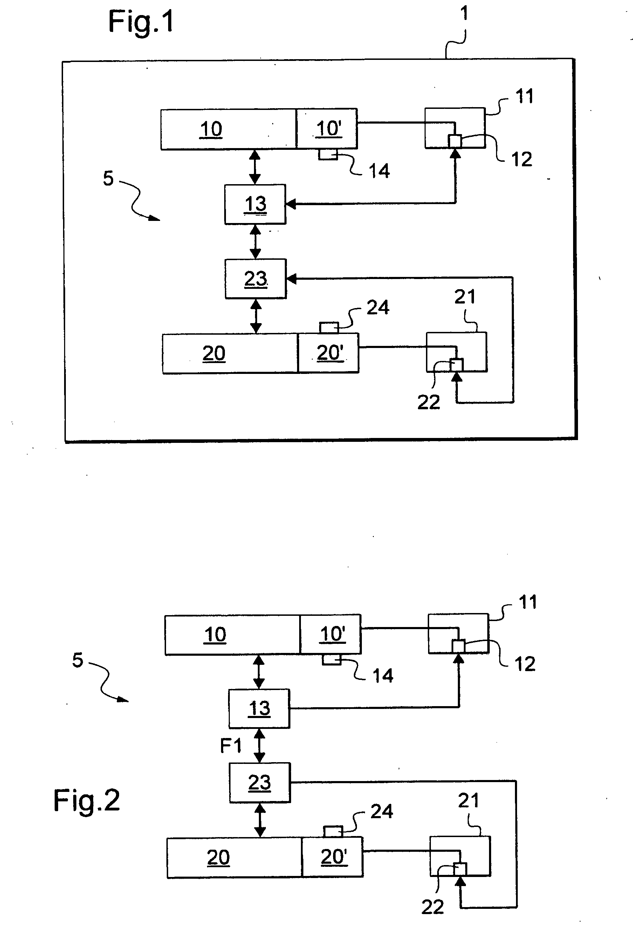

La figure 1 présente un aéronef 1 selon un premier mode de réalisation. Il est à noter que les organes de l'aéronef qui ne sont pas directement concernés par l'invention ne sont pas représentés sur les figures pour ne pas alourdir inutilement ces figures.

Indépendamment du mode de réalisation, l'aéronef 1 comporte au moins deux moteurs, à savoir un premier moteur 10 et un deuxième moteur 20.

Chaque moteur 10, 20 peut être un moteur thermique muni d'une turbine libre 10', 20', les turbines libres 10', 20' des moteurs 10, 20 entraînant notamment une chaîne de transmission de puissance reliée au minimum à un rotor de sustentation.

De plus, le premier moteur 10 et le deuxième moteur 20 sont respectivement alimentés en carburant par une première pompe de gavage 12 agencée dans une première nourrice 11 et une deuxième pompe de gavage 22 agencée dans une deuxième nourrice 21.

L'aéronef est en outre muni d'un système 5 de sécurité pour éviter une survitesse du premier moteur 10 et/ ou du deuxième moteur 20.

Ce système 5 comporte une première unité de contrôle 13 commandant le premier moteur 10 et une deuxième unité de contrôle 23 du deuxième moteur. Les unités de contrôle peuvent être des moyens connus sous l'acronyme FADEC. Chaque unité de contrôle commande alors un moteur dit « moteur associé » ou « moteur correspondant ».

De plus, le système 5 comprend un dispositif de mesure coopérant avec les unités de contrôle 13, 23.

Ainsi, le dispositif de mesure inclut un premier organe 14 de détermination de la valeur d'un paramètre de surveillance du premier moteur 10, ce premier organe 14 communiquant avec la première unité de contrôle 13. De même, le dispositif de mesure inclut un deuxième organe 24 de détermination de la valeur d'un paramètre de surveillance du deuxième moteur 20, ce deuxième organe 24 communiquant avec la deuxième unité de contrôle 23.

Il est à noter que dans le cadre d'un turbomoteur à turbine libre, le paramètre de surveillance des moteurs peut être la vitesse de rotation des turbines libres 10', 20' des moteurs 10, 20.

Chaque unité de contrôle 13, 23 peut alors comprendre une mémoire et un moyen d'exécution de type processeur par exemple ou équivalent. Le moyen d'exécution exécute alors des instructions mémorisées dans la mémoire de l'unité de contrôle pour protéger le moteur associé, afin d'éviter l'apparition du phénomène de survitesse sur ce moteur associé.

Selon le procédé appliqué, une unité de contrôle a pour fonction de couper le moteur associé lorsque le paramètre de surveillance de ce moteur associé dépasse un premier seuil, l'autre unité de contrôle ayant pour fonction de couper l'autre moteur lorsque le paramètre de surveillance de cet autre moteur dépasse un deuxième seuil distinct du premier seuil.

Le deuxième seuil est distinct du premier seuil pour éviter une coupure simultanée des moteurs, le deuxième seuil étant supérieur au premier seuil.

Le premier seuil et le deuxième seuil sont des seuils opérationnels, et non pas des seuils applicables uniquement lors d'essais.

En complément, chaque moteur peut comporter un moyen de sécurité agissant sur les aubes des turbines 10', 20' des moteurs 10, 20 à partir d'une limite prédéterminée du paramètre de surveillance de ces moteurs 10, 20.

Ces moyens de sécurité ne sont pas représentés sur les figures dans un but de simplification de ces figures. Toutefois, il est à noter que les moyens de sécurité peuvent être de type « blade shedding » par exemple.

Le deuxième seuil est alors favorablement inférieur à la limite prédéterminée.

Par ailleurs, pour optimiser la sécurité, chaque unité de contrôle 13, 23 peut provoquer la coupure de la pompe de gavage 12, 22 du moteur associé suite à la coupure de ce moteur associé.

Afin de réduire les coûts de production et de faciliter la maintenance de l'aéronef, la première unité de contrôle 13 et la deuxième unité de contrôle 23 sont avantageusement identiques.

Chaque unité de contrôle est programmée pour pouvoir couper le moteur associé en mettant en oeuvre le premier seuil ou le deuxième seuil.

Par suite, selon le premier mode de réalisation de la figure 1, durant le vol et lorsqu'un paramètre de surveillance d'un moteur dépasse le premier seuil, les unités de contrôle communiquent entre elles. Dès lors, une unité de contrôle particulière coupe le moteur particulier associé si l'autre unité de contrôle indique à cette unité de contrôle particulière que l'autre moteur n'est pas coupé suite à une survitesse.

A titre d'exemple, lorsque le paramètre de surveillance du premier moteur 10 dépasse le premier seuil, la première unité de contrôle 13 communique avec la deuxième unité de contrôle pour connaître l'état de fonctionnement du deuxième moteur. Si la deuxième unité de contrôle 23 indique à la première unité de contrôle que le deuxième moteur 20 fonctionne, alors la première unité de contrôle coupe le premier moteur 10 et éventuellement la première pompe de gavage 12. Dans le cas contraire, si le moteur a été coupé suite à une survitesse, la première unité de contrôle coupe le premier moteur 10 et éventuellement la première pompe de gavage 12 uniquement lorsque le paramètre de surveillance du premier moteur 10 dépasse le deuxième seuil.

Selon un autre mode de fonctionnement, l'unité de contrôle qui détecte en premier le dépassement d'un seuil envoie un signal électrique à l'autre unité de contrôle, l'autre unité de contrôle appliquant alors l'autre seuil.

Selon le deuxième mode de réalisation explicité par les figures 2 à 4, on fixe au début du vol et favorablement au démarrage de l'aéronef les seuils appliqués par chaque unité de contrôle.

Ainsi, avant le début du vol en tant que tel, on décide qu'une unité de contrôle doit couper le moteur associé lorsqu'un desdits seuils programmés est dépassé, alors que l'autre unité de contrôle doit couper l'autre moteur lorsque l'autre seuil programmé est dépassé.

Par suite, une unité de contrôle peut être qualifiée de « maître », l'autre unité de traitement étant qualifiée d'« esclave ».

L'unité de contrôle « maître » peut alors couper le moteur associé en mettant en oeuvre le premier seuil alors que l'unité de contrôle « esclave » coupe le moteur associé en mettant en oeuvre le deuxième seuil. L'inverse est aussi envisageable.

Selon une première variante du deuxième mode de réalisation, on détermine les seuils à appliquer par unité de contrôle en fonction d'un critère temporel. Par exemple, on choisit le seuil appliqué par chaque unité de contrôle en fonction de l'ordre de mise en marche des unités de contrôle.

L'unité de contrôle qui démarre en premier lieu peut par exemple devenir l'unité de contrôle « maître », l'unité de contrôle démarrant en second lieu devenant l'unité de contrôle « esclave ».

A cet effet, selon une alternative de cette première variante schématisée sur la figure 2, les unités de contrôle communiquent l'une avec l'autre au démarrage conformément à la double flèche F1.

Lorsqu'une unité de contrôle est mise en marche, cette unité de contrôle détermine l'état de l'autre unité de contrôle pour déterminer si elle doit prendre le statut d'unité de contrôle « maître » ou « esclave ».

Par exemple, une unité de contrôle donnée qui démarre vient aussitôt lire le signal de démarrage de l'autre unité de contrôle. Si le signal de démarrage de l'autre unité de contrôle est absent, l'unité de contrôle donnée prend l'état « maître » et envoie aussitôt son propre signal de démarrage. Ce signal de démarrage sera lu par l'autre unité de contrôle à son démarrage, l'autre unité de contrôle prenant l'état « esclave ».

Selon une deuxième variante, un dispositif externe distinct des unités de contrôle indique à chaque unité de contrôle le seuil à mettre en oeuvre.

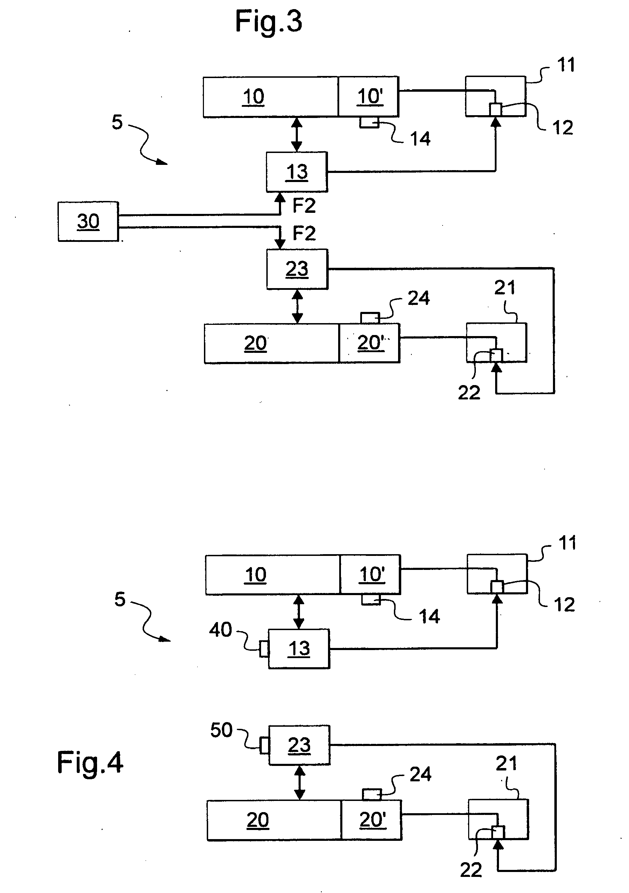

Selon la réalisation de cette deuxième variante schématisée sur la figure 3, le dispositif externe comporte un organe avionique 30 communiquant avec les deux unités de contrôle 13, 23, un organe avionique dédié à ce système 5 ou pouvant remplir d'autres tâches.

L'organe avionique 30 peut alors indiquer à l'unité de contrôle ayant été démarrée en premier lieu qu'elle doit agir en tant qu'unité de contrôle « maître », et indiquer à l'unité de contrôle ayant été démarrée en second lieu qu'elle doit agir en tant qu'unité de contrôle « esclave ».

De façon alternative, l'organe avionique peut être programmé pour attribuer arbitrairement un seuil à chaque unité de contrôle, selon un critère géographique par exemple.

Selon la réalisation de cette deuxième variante schématisée sur la figure 4, le dispositif externe comprend un organe externe par unité de contrôle, un organe externe 40 d'une unité de contrôle 13 étant différent de l'organe externe 50 de l'autre unité de contrôle 23. Chaque organe externe permet à l'unité de contrôle associée de déterminer le seuil à appliquer.

Par exemple, chaque organe externe peut comprendre un organe mécanique de montage de l'unité de contrôle ou encore un câblage électrique particulier.

On choisit donc le seuil à appliquer par une unité de contrôle 13, 23 en fonction de son organe externe 40, 50, par un détrompage mécanique, électrique ou électronique par exemple. Chaque unité de contrôle détermine la nature de l'organe externe associé et en déduit le seuil à appliquer.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Procédé de commande pour commander un système de sécurité survitesse d'un aéronef (1) comportant au moins un premier moteur (10) et un deuxième moteur (20),
**caractérisé en ce qu'**on coupe un moteur lorsqu'un paramètre de surveillance de ce moteur dépasse un premier seuil et on coupe un autre moteur distinct dudit moteur lorsque le paramètre de surveillance de cet autre moteur dépasse un deuxième seuil, ledit deuxième seuil étant supérieur audit premier seuil.

2. Procédé selon la revendication 1,
**caractérisé en ce que**, chaque moteur (10, 20) comportant une turbine libre (10', 20'), ledit paramètre de surveillance d'un moteur (10, 20) est la vitesse de rotation de la turbine libre (10', 20') de ce moteur (10, 20).

3. Procédé selon l'une quelconque des revendications 1 à 2,
**caractérisé en ce que**, chaque moteur comportant un moyen de sécurité agissant sur des aubes d'une turbine (10', 20'), ledit moyen de sécurité étant activé à compter d'une limite prédéterminée du paramètre de surveillance dudit moteur (10, 20), ledit deuxième seuil est inférieur à ladite limite prédéterminée.

4. Procédé selon l'une quelconque des revendications 1 à 3,
**caractérisé en ce que**, chaque moteur (10, 20) étant alimenté en carburant par une pompe de gavage (12, 22), on coupe la pompe de gavage (12, 22) d'un moteur (10, 20) lorsque l'on coupe ce moteur (10, 20).

5. Procédé selon l'une quelconque des revendications 1 à 4, **caractérisé en ce qu'**une première unité de contrôle (13) commandant un premier moteur (10) et une deuxième unité de contrôle (23) commandant un deuxième moteur (20), lorsqu'un moteur dépasse le premier seuil l'unité de contrôle associée :
- coupe ce moteur au premier seuil si l'autre unité de contrôle lui indique que l'autre moteur n'est pas coupé, et
- coupe ce moteur au deuxième seuil si l'autre unité de contrôle lui indique que l'autre moteur est coupé.

6. Procédé selon l'une quelconque des revendications 1 à 4,
**caractérisé en ce qu'**une première unité de contrôle (13) commandant un premier moteur (10) et une deuxième unité de contrôle (23) commandant un deuxième moteur (20), on établit avant le décollage et pour tout le vol qu'une unité de contrôle coupe le moteur associé si le paramètre de surveillance du moteur associé dépasse le premier seuil, l'autre unité de contrôle devant couper l'autre moteur si le paramètre de surveillance de l'autre moteur dépasse le deuxième seuil.

7. Procédé selon la revendication 6,
**caractérisé en ce que**, chaque unité de contrôle (13, 23) pouvant couper le moteur (10, 20) associé au premier seuil et au deuxième seuil, on choisit le seuil appliqué par chaque unité de contrôle (13, 23) en fonction de l'ordre de mise en marche des unités de contrôle (13, 23).

8. Procédé selon la revendication 7,
**caractérisé en ce que** lorsqu'une unité de contrôle est mise en marche, cette unité de contrôle examine l'état de l'autre unité de contrôle pour déterminer si elle a été mise en fonctionnement avant l'autre unité de contrôle.

9. Procédé selon la revendication 6,
**caractérisé en ce que** chaque unité de contrôle pouvant couper le moteur associé au premier seuil et au deuxième seuil, un dispositif externe distinct des unités de contrôle indique à chaque unité de contrôle le seuil à mettre en oeuvre.

10. Procédé selon la revendication 9,
**caractérisé en ce que**, ledit dispositif externe comprenant un organe externe par unité de contrôle, un organe externe (40) d'une unité de contrôle (13) étant différent de l'organe externe (50) de l'autre unité de contrôle (23), on choisit le seuil à appliquer par une unité de contrôle (13, 23) en fonction de l'organe externe (40, 50) associé.

11. Procédé selon la revendication 1,
**caractérisé en ce qu'**une première unité de contrôle (13) commandant un premier moteur (10) et une deuxième unité de contrôle (23) commandant un deuxième moteur (20), la première unité de contrôle est programmée pour appliquer uniquement un seuil, la deuxième unité de contrôle étant programmée pour appliquer uniquement l'autre seuil.

12. Système (5) de sécurité survitesse comportant au moins un premier moteur (10) et un deuxième moteur (20),
**caractérisé en ce qu'**il comporte une première unité de contrôle (13) commandant le premier moteur (10) et une deuxième unité de contrôle (23) commandant le deuxième moteur (20) mettant en oeuvre le procédé selon l'une quelconque des revendications 1 à 11, chaque unité de contrôle (10, 20) coopérant avec un dispositif de mesure (14, 24) pour déterminer un paramètre de surveillance du moteur (10, 20) associé, une unité de contrôle exécutant des instructions pour couper le moteur associé lorsqu'un paramètre de surveillance de ce moteur dépasse un premier seuil, l'autre unité de contrôle exécutant des instructions pour couper l'autre moteur distinct de ce moteur lorsque le paramètre de surveillance de cet autre moteur dépasse un deuxième seuil, ledit deuxième seuil étant supérieur audit premier seuil.

13. Système selon la revendication 12,
**caractérisé en ce que** chaque unité de contrôle (13, 23) est reliée à une pompe de gavage (12, 22) du moteur (10, 20) associé.

14. Aéronef (1) comportant au moins un premier moteur (10) et un deuxième moteur (20),
**caractérisé en ce qu'il** comporte un système (5) de sécurité survitesse selon l'une quelconque des revendications 12 à 13.

## Patentansprüche

1. Verfahren zum Steuern eines Überdrehzahl-Sicherheitssystems eines Luftfahrzeugs (1) mit mindestens einem ersten Motor (10) und einem zweiten Motor (20),
**dadurch gekennzeichnet, dass** ein Motor abgeschaltet wird, wenn ein Überwachungsparameter dieses Motors einen ersten Stellenwert überschreitet, und ein weiterer, von diesem Motor verschiedener Motor abgeschaltet wird, wenn der Überwachungsparameter dieses weiteren Motors einen zweiten Schwellenwert überschreitet, wobei der zweite Schwellenwert größer als der erste Schwellenwert ist.

2. Verfahren nach Anspruch 1,
**dadurch gekennzeichnet, dass** jeder Motor (10, 20) eine Arbeitsturbine (10', 20') aufweist, wobei der Überwachungsparameter eines Motors (10, 20) die Rotationsgeschwindigkeit der Arbeitsturbine (10', 20') dieses Motors (10, 20) ist.

3. Verfahren nach einem der Ansprüche 1 oder 2,
**dadurch gekennzeichnet, dass** jeder Motor ein Sicherheitsorgan aufweist, das auf die Schaufeln einer Turbine (10', 20') einwirkt, wobei das Sicherheitsorgan ab einer vorbestimmten Grenze des Überwachungsparameters des Motors (10, 20) aktiviert wird, wobei der zweite Schwellenwert kleiner ist als der vorbestimmte Grenzwert.

4. Verfahren nach einem der Ansprüche 1 bis 3,
**dadurch gekennzeichnet, dass** jeder Motor (10, 20) über eine Vordruckpumpe (12, 22) mit Treibstoff versorgt wird, wobei die Vordruckpumpe (12, 22) eines Motors (10, 20) abgeschaltet wird, wenn dieser Motor (10, 20) abgeschaltet wird.

5. Verfahren nach einem der Ansprüche 1 bis 4,
**dadurch gekennzeichnet, dass** eine erste Steuereinheit (13), die einen ersten Motor (10) steuert, und eine zweite Steuereinheit (23), die einen zweiten Motor (20) steuert, wenn ein Motor den ersten Schwellenwert überschreitet, die zugehörige Steuereinheit:
- diesen Motor bei Erreichen des ersten Schwellenwertes abschaltet, wenn die andere Steuereinheit ihr anzeigt, dass der andere Motor nicht abgeschaltet ist, und
- diesen Motor bei Erreichen des zweiten Schwellenwertes abschaltet, wenn die andere Steuereinheit ihr anzeigt, dass der andere Motor abgeschaltet ist.

6. Verfahren nach einem der Ansprüche 1 bis 4,
**dadurch gekennzeichnet, dass** eine erste Steuereinheit (13) einen ersten Motor (10) steuert, und eine zweite Steuereinheit (23) einen zweiten Motor (20) steuert, wobei vor dem Start und für den gesamten Flug festgelegt wird, dass eine Steuereinheit den zugehörigen Motor abschaltet, wenn der Überwachungsparameter des zugehörigen Motors den ersten Schwellenwert überschreitet, wobei die andere Steuereinheit den anderen Motor abschalten muss, wenn der Überwachungsparameter des anderen Motors den zweiten Schwellenwert überschreitet.

7. Verfahren nach Anspruch 6,
**dadurch gekennzeichnet, dass** jede Steuereinheit (13, 23) den zugehörigen Motor (10, 20) bei dem ersten Schwellenwert und bei dem zweiten Schwellenwert abschalten kann, wobei der von jeder Steuereinheit (13, 23) angewendete Schwellenwert in Abhängigkeit von der Reihenfolge des Einschaltens der Steuereinheiten (13, 23) gewählt wird.

8. Verfahren nach Anspruch 7,
**dadurch gekennzeichnet, dass**, wenn eine Steuereinheit angeschaltet ist, diese Steuereinheit den Zustand der anderen Steuereinheit untersucht, um zu bestimmen, ob sie vor der anderen Steuereinheit in Betrieb genommen wurde.

9. Verfahren nach Anspruch 6,
**dadurch gekennzeichnet, dass** jede Steuereinheit den zugehörigen Motor bei dem ersten Schwellenwert und dem zweiten Schwellenwert abschalten kann, wobei eine äußere Vorrichtung, die separat von den Steuereinheiten ist, jeder Steuereinheit den auszuführenden Schwellenwert anzeigt.

10. Verfahren nach Anspruch 9,
**dadurch gekennzeichnet, dass** die äußere Vorrichtung ein äußeres Organ pro Steuereinheit aufweist, wobei ein äußeres Organ (40) einer Steuereinheit (13) unterschiedlich ist von dem äußeren Organ (50) der anderen Steuereinheit (23), wobei der von einer Steuereinheit (13, 23) anzuwendende Schwellenwert in Abhängigkeit von dem zugehörigen äußeren Organ (40, 50) gewählt wird.

11. Verfahren nach Anspruch 1,
**dadurch gekennzeichnet, dass** eine erste Steuereinheit (13) einen ersten Motor (10) steuert, und eine zweite Steuereinheit (23) einen zweiten Motor (20) steuert, wobei die erste Steuereinheit so programmiert ist, dass sie ausschließlich einen Schwellenwert anwendet, und wobei die zweite Steuereinheit so programmiert ist, dass sie ausschließlich den anderen Schwellenwert anwendet.

12. Überdrehzahl-Sicherheitssystem (5) mit mindestens einem ersten Motor (10) und einem zweiten Motor (20),
**dadurch gekennzeichnet, dass** es eine erste Steuereinheit (13) aufweist, die den ersten Motor (10) steuert, und eine zweite Steuereinheit (23) aufweist, die den zweiten Motor (20) steuert, wobei das System das Verfahren nach einem der Ansprüche 1 bis 11 ausführt, wobei jede Steuereinheit (10, 20) mit einer Messvorrichtung (14, 24) zusammenwirkt, um einen Überwachungsparameter des zugehörigen Motors (10, 20) zu bestimmen, wobei eine Steuereinheit Befehle ausübt zum Abschalten des zugehörigen Motors, wenn ein Überwachungsparameter dieses Motors einen ersten Schwellenwert überschreitet, und die andere Steuereinheit Befehle ausführt, um den anderen, von diesem Motor verschiedenen Motor abzuschalten, wenn der Überwachungsparameter dieses anderen Motors einen zweiten Schwellenwert überschreitet, wobei der zweite Schwellenwert größer ist als der erste Schwellenwert.

13. System nach Anspruch 12,
**dadurch gekennzeichnet, dass** jede Steuereinheit (13, 23) mit einer Vordruckpumpe (12, 22) des zugehörigen Motors (10, 20) verbunden ist.

14. Luftfahrzeug (1) mit mindestens einem ersten Motor (10) und einem zweiten Motor (20),
**dadurch gekennzeichnet, dass** es ein Überdrehzahl-Sicherheitssystem (5) nach einem der Ansprüche 12 bis 13 aufweist.

## Claims

1. Control method for controlling an overspeed safety system of an aircraft (1) comprising at least a first engine (10) and a second engine (20),
**characterised in that** an engine is shut down when a monitoring parameter of this engine exceeds a first threshold, and another engine distinct from said engine is shut down when the monitoring parameter of this other engine exceeds a second threshold, said second threshold being greater than said first threshold.

2. Method according to Claim 1,
**characterised in that** each engine (10, 20) comprises a free turbine (10', 20'), and said monitoring parameter of an engine (10, 20) is the speed of rotation of the free turbine (10', 20') of this engine (10, 20).

3. Method according to any one of Claims 1 to 2,
**characterised in that** each engine comprises a safety means acting on blades of a turbine (10', 20'), said safety means being activated from a predetermined limit of the monitoring parameter of said engine (10, 20), and said second threshold is lower than said predetermined limit.

4. Method according to any one of Claims 1 to 3,
**characterised in that** each engine (10, 20) is fed with fuel by a booster pump (12, 22), and the booster pump (12, 22) of an engine (10, 20) is shut down when this engine (10, 20) is shut down.

5. Method according to any one of Claims 1 to 4,
**characterised in that** a first control unit (13) controls a first engine (10) and second control unit (23) controls a second engine (20), and when an engine exceeds the first threshold, the associated control unit:
- shuts down this engine at the first threshold if the other control unit informs it that the other engine has not been shut down; and
- shuts down this engine at the second threshold if the other control unit informs it that the other engine has been shut down.

6. Method according to any one of Claims 1 to 4,
**characterised in that** a first control unit (13) controls a first engine (10) and a second control unit (23) controls a second engine (20), and prior to takeoff and for the entire flight, it is determined that one control unit shuts down the associated engine if the monitoring parameter of the associated engine exceeds the first threshold, while the other control unit should shut down the other engine if the monitoring parameter of the other engine exceeds the second threshold.

7. Method according to Claim 6,
**characterised in that** each control unit (13, 23) is capable of shutting down the associated engine (10, 20) at the first threshold and at the second threshold, and the threshold applied by each control unit (13, 23) is selected as a function of the order in which the control units (13, 23) are switched on.

8. Method according to Claim 7,
**characterised in that** when a control unit is switched on, this control unit examines the state of the other control unit in order to determine whether it was switched on before the other control unit.

9. Method according to Claim 6,
**characterised in that** each control unit is capable of shutting down the associated engine at the first threshold and at the second threshold, and an external device distinct from the control units informs each control unit which threshold to implement.

10. Method according to Claim 9,
**characterised in that** said external device comprises one external member per control unit, with an external member (40) of a control unit (13) being different from the external member (50) of the other control unit (23), the threshold to be applied by a control unit (13, 23) being selected as a function of the associated external member (40, 50).

11. Method according to Claim 1,
**characterised in that** a first control unit (13) controls a first engine (10) and a second control unit (23) controls a second engine (20), the first control unit being programmed to apply only one threshold, and the second control unit being programmed to apply only the other threshold.

12. Overspeed safety system (5) comprising at least a first engine (10) and a second engine (20),
**characterised in that** it comprises a first control unit (13) controlling the first engine (10) and a second control unit (23) controlling the second engine (20) by implementing the method according to any one of Claims 1 to 11, each control unit (10, 20) cooperating with a measurement device (14, 24) for determining a monitoring parameter of the associated engine (10, 20), one control unit executing instructions in order to shut down the associated engine when a monitoring parameter of this engine exceeds a first threshold, the other control unit executing instructions in order to shut down the other engine distinct from this engine when the monitoring parameter of this other engine exceeds a second threshold, said second threshold being greater than said first threshold.

13. System according to Claim 12,
**characterised in that** each control unit (13, 23) is connected to a booster pump (12, 22) of the associated engine (10, 20).

14. Aircraft (1) comprising at least a first engine (10) and a second engine (20),
**characterised in that** it comprises an overspeed safety system (5) according to any one of Claims 12 to 13.
